# EUROPÄISCHE PATENTSCHRIFT

(11) **EP 1 270 060 B1**
(45) Veröffentlichungstag und Bekanntmachung des Hinweises auf die Patenterteilung: **26.10.2005**
(21) Anmeldenummer: 02012882.3
(22) Anmeldetag: 11.06.2002
(51) Int. Cl.: B01D 50/00, B04C 9/00, B07B 9/02

(54) **Vorrichtung zum Abscheiden von Feststoffen aus einem gasförmigen Medium**
Device for separating solids from a gaseous medium
Dispositif pour la séparation des solides d'un milieu gazeux

(30) Priorität: 21.06.2001 DE 20110152 U
(43) Veröffentlichungstag der Anmeldung: 02.01.2003
(73) Patentinhaber: Handte Umwelttechnik GmbH, 78532 Tuttlingen (DE)
(72) Erfinder: Handte, Siegfried, Dipl.-Ing., 78351 Bodman-Ludwigshafen (DE)
(74) Vertreter: Müller, Hans

(56) Entgegenhaltungen:
- DE-A- 10 014 775
- DE-U- 29 914 378
- DE-U- 29 922 658
- US-A- 4 411 674
- US-A- 4 790 865

## Beschreibung

### TECHNISCHES GEBIET

Die Erfindung betrifft eine Vorrichtung, mit der sich Feststoffe aus einem gasförmigen Medium abscheiden lassen. Solche Feststoffe sind beispielsweise Aluminumspäne und -stäube, und damit insbesonders brennbare beziehungsweise explosive Stäube.

Brennbare beziehungsweise explosive Stäube der deutschen Explosionsklasse ST 2, in welche Klasse unter anderem vorstehende Aluminiumspäne und -stäube fallen, erfordern entweder bis ca. 0,1 bar druckfest ausgelegte Trockenabscheider, die mit entsprechenden Entlastungsflächen und Ableitungskanälen versehen sind, so dass ein Austreten des Überdrucks gefahrlos ins Freie abgeführt werden kann, oder aber es müssen die Trockenabscheider in druckfester Ausführung bis ca. 4 bar ausgelegt und damit zusätzlich mit einer Explosionsunterdrückung mittels inertem Löschmittel versehen werden.

### STAND DER TECHNIK

Aus der DE 299 14 378 U1 ist eine Vorrichtung der eingangs genannten Art bekannt, bei der dem explosiven Feststoff-Gasgemisch kontinuierlich ein Additiv zugemischt wird. Diese Vorrichtung wird bei normalem atmosphärischen Druck betrieben.

### DARSTELLUNG DER ERFINDUNG

Ausgehend von diesem Stand der Technik liegt der Erfindung die Aufgabe zu Grunde, eine gefahrlos in Arbeitsräumen aufzustellende Abscheide-Vorrichtung insbesondere für Aluminiumspäne der eingangs genannten Art anzugeben.

Diese Erfindung ist durch die Merkmale des Anspruchs 1 gegeben. Sinnvolle Weiterbildungen der Erfindung sind Gegenstand von sich an Anspruch 1 anschließenden weiteren Ansprüchen.

Der als "einteiliges", kompaktes Gerät konzipierte erfindungsgemäße Trockenabscheider fällt in die Explosionsklasse ST 1. Dadurch ist es möglich, den Trockenabscheider druckfest auf etwa 0,1 bar auszulegen und zur Ableitung eines eventuell entstehenden Explosionsdruckes mit einer Druckentlastungseinrichtung in den Arbeitsraum hin zu entlasten. Ein derartiger Trockenabscheider läßt sich damit innerhalb von Arbeitsräumen an beliebigen, auch wechselnden inneren Bereichen des Arbeitsraumes aufstellen, und zwar wegen des nicht erforderlichen Anschlusses an nach außen ins Freie führenden Abluftkanälen.

Mit dem erfindungsgemäßen Trockenabscheider lassen sich damit auf wirtschaftlich vertretbare Weise Aluminiumspäne bei der entsprechenden Aluminiumbearbeitung aus der Abluft absondern. Diese Aluminiumspäne können dann einer Wiederverwertung zugeführt werden. Dieses Einsatzgebiet hat erhebliche Bedeutung, da Aluminium bearbeitende Maschinen aus Kosteneinsparungsgründen verstärkt trocken oder mit einer Minimalmengenschmierung arbeiten. Die bei solchen Bearbeitungsvorgängen anfallenden Späne wie insbesondere Aluminiumspäne haben einen sehr kleinen Staubanteil, sowie Öl- und Emulsionsaerosole. Der Staubanteil liegt bei diesem Einsatzgebiet, bezogen auf die Absaugmenge, bei weniger als zehn Milligramm pro Kubikmeter Luft.

Bei dem in einer Zeichnung dargestellten Ausführungsbeispiel für einen erfindungsgemäßen Trockenabscheider sind zwei Sichtungsvorgänge zum Separieren der groben Späne aus der zur reinigenden Abluft vorgesehen. Eine erste Sichtung erfolgt mittels eines Zyklons. Innerhalb des Zyklons werden die gröberen und damit schwereren Teilchen in der Rohluft nach außen geschleudert und durch eine in der Außenwandung des Zyklons vorhandene Öffnung ausgeschieden. Die mit feineren Staubanteilen beladene Restluft wird im Inneren des Zyklons zentral einer nachfolgenden Feinfilterung zugeführt, wobei diese Luft vorher mit Additivpartikeln vermischt wird.

Die aus dem Zyklon abgesonderten groben Späneteilchen werden noch einmal gesichtet. Dies erfolgt im vorliegenden Beispielsfall in einem Windsichter. Innerhalb dieses Windsichters können mit Hilfe ihres unterschiedlichen Gewichtes Späneteilchen durch Schwerkraft ausgesondert werden. Bei Aluminiumstäuben können beispielsweise Späne mit einem Durchmesser größer 0,5 mm wirtschaftlich weiterverwertet werden. Späne mit einer solchen Größe werden also durch die zweite Sichtung endgültig aus dem Trockenabscheider ausgesondert.

Das restliche Staub- und kleine Späne-Luftgemisch wird durch die Vermischung mit Additivpartikeln für eine weitere Verwendung unbrauchbar. Dieses Gemisch wird über einen Feinfilter geleitet und als Reinluft wieder in den Arbeitsraum, in der der erfindungsgemäße Trockenabscheider platziert ist, hineingeleitet. Das Staub-Additiv-Gemisch fällt entweder sofort in ein entsprechend platziertes Behältnis, oder es setzt sich an der Filteroberfläche ab und fällt dann beim Abrütteln der Filter auch in das Behältnis hinein.

Nähere Angaben zu der Ausbildung eines solchen beispielhaften, erfindungsgemäßen Trockenabscheiders sind den in Ansprüchen aufgeführten Merkmalen sowie dem nachstehenden Ausführungsbeispiel zu entnehmen.

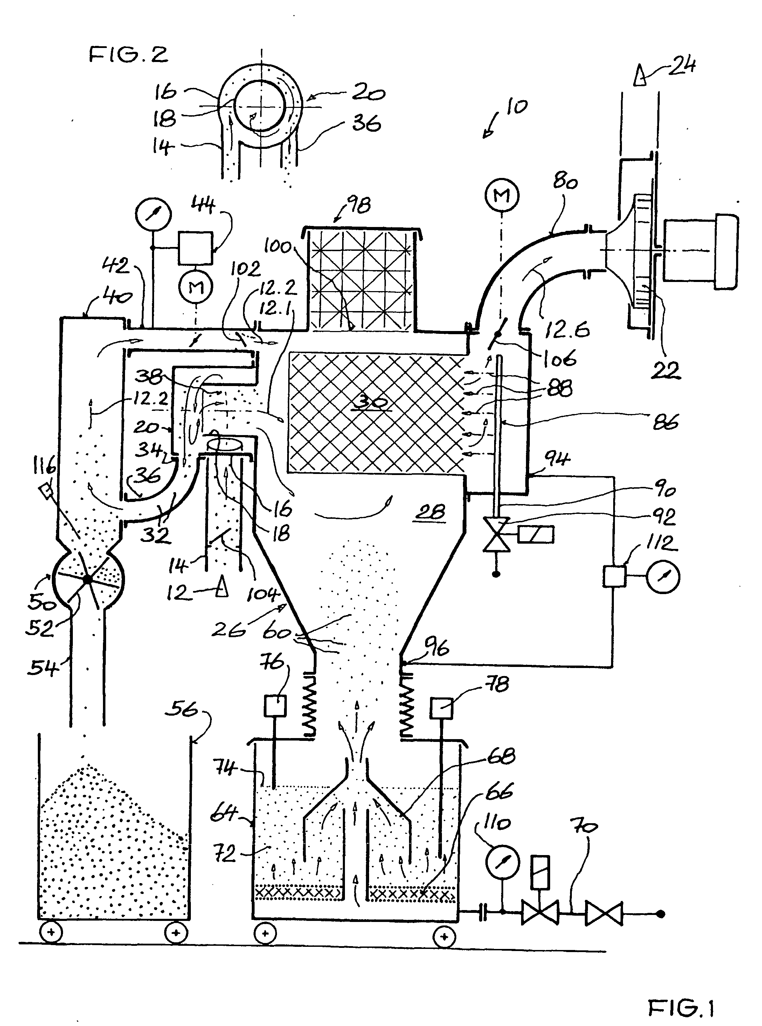

### KURZE BESCHREIBUNG DER ZEICHNUNG

Die Erfindung wird im Folgenden anhand des in der Zeichnung dargestellten Ausführungsbeispiels näher beschrieben und erläutert. Die einzige Figur zeigt einen schematisierten Querschnitt durch eine Abscheide-Vorrichtung nach der Erfindung.

### WEGE ZUM AUSFÜHREN DER ERFINDUNG

Eine Abscheide-Vorrichtung 10 ist einer in der Zeichnung nicht dargestellten Bearbeitungsmaschine zugeordnet, auf der Aluminium trocken bearbeitet oder mit einer Minimalmengenschmierung bearbeitet wird. Durch die Abscheide-Vorrichtung 10 werden die bei dem Bearbeitungsvorgang anfallenden hauptsächlich Aluminiumspäne, die mit einem sehr kleinen Staubanteil sowie Öl- und Emulsionsaerosole beladen sind, aus der Umgebungsluft abgeschieden.

Die mit Spänen und Staub beladene Rohluft 12 wird durch ein Ansaugrohr 14 angesaugt. Das Ansaugrohr 14 mündet tangential in ein äußeres Rohr 16 ein, das zusammen mit einem inneren Rohr 18 (Tauchrohr) einen Vorzyklon 20 bildet. Die Rohluft 12 wird dabei durch einen endseitig an der Abscheide-Vorrichtung 10 in einer Abluftleitung 80 installierten Ventilator 22, der im vorliegenden Fall ein Radialventilator ist, durch die Abscheide-Vorrichtung 10 hindurchgesaugt und nach entsprechender Reinigung als Reinluft 24 wieder in denselben Raum hinein entlassen, in dem die Abscheide-Vorrichtung 10 und die entsprechende Bearbeitungsmaschine stehen.

Ein derartiger Vorzyklon 20 ist prinzipiell aus der DE 299 22 658 U1 bekannt. Bei dem Vorzyklon 20 wird die mit Späne- und Staubpartikel beladene Rohluft 12 tangential in das äußere Rohr 16 eingeleitet. Die Rohluft 12 rotiert in dem äußeren Rohr 16 und strömt dann durch das innere Rohr 18 hindurch in den Filterraum 28 eines Filtergehäuses 26. In dem Filterraum 28 ist ein Feinfilter 30 bekannter Bauart angeordnet.

In dem Vorzyklon 20 werden die schwereren Bestandteile der Rohluft 12, wie die schwereren Späne 32, radial in dem äußeren Rohr 16 nach außen geschleudert und treten durch einen tangential am äußeren Rohr 16 angeschlossenen Stutzen 34 in eine Verbindungsleitung 36 hinein. Die leichteren Schmutzbestandteile der Rohluft 12, wie die beispielsweise leichteren Späne oder Staubpartikel 38, werden durch das innere Rohr 18 in den Filterraum 28 hineingesaugt.

Die Verbindungsleitung 36 führt in den unteren Bereich eines Windsichters 40. Der Windsichter 40 wird von der durch die Verbindungsleitung 36 strömenden, mit insbesondere schwereren Spänen 32 beladenen Luft von unten nach oben durchströmt. Diese Luft 12.2 strömt oben aus dem Windsichter 40 in eine Zuleitung 42, die in den Filterraum 28 einmündet. In der Zuleitung 42 ist eine Unterdruckregelung 44 vorhanden, mit der der Unterdruck in der Zuleitung 42 und damit in dem Windsichter 40 so geregelt werden kann, dass schwerere Verunreinigungen nach unten in dem Windsichter 40 fallen und nur entsprechend leichtere Verunreinigungen nach oben durch den Windsichter 40 hindurchgeführt und in den Filterraum 28 eingeleitet werden. In dem Windsichter 40 werden also schwerere Verunreinigungen von leichteren Verunreinigungen, dass heißt größere Verunreinigungen von kleineren Verunreinigungen getrennt. Es hängt von der Größe des Unterdruckes ab, bis zu welcher Korngröße Partikel wie Aluminiumspäne nach oben durch dem Windsichter 40 mitgenommen werden. Die nicht mitgenommenen, gröberen Späne 32 sinken nach unten im Windsichter ab und können über eine unten im Windsichter angeordnete Zellenradschleuse 50, die im vorliegenden Fall mit einem Zentralrad 52 ausgestattet ist, in ein Austragsrohr 54 überführt und dann in einem im vorliegenden Fall fahrbaren Spänebehälter 56 eingesammelt werden. Ein in der Zellenradschleuse 50 vorhandener Drehzahlwächter für das Zentralrad 52 überwacht die Funktion dieser Zellenradschleuse 50.

In den Filterraum 28 strömt also durch das innere Rohr 18 hindurch mit Stäuben beladene Luft 12.1 und außerdem durch die Zuleitung 42 hindurch mit leichten Spänen 38 beladene Luft 12.2. Innerhalb des Filterraumes 28 vermischen sich diese noch mit feinen Partikeln beladenen Luftströme 12.1, 12.2 mit Additiv-Partikeln 60. Diese Additiv-Partikel 60 werden von unten mittels Druckluft in den Filterraum 28 hineingeblasen. Die Additiv-Partikel 60 lagern sich dabei teilweise auch außen an dem Feinfilter 30 an. Die noch mit Stäuben beladene Luft innerhalb des Filterraumes 28 vermischt sich mit diesen Additiv-Partikeln 60. Durch diese Vermischung wird das Luftgemisch im Filterraum 28 inexplosiv. Das dabei entstehende nicht explosive Staubgemisch fällt aus dem unten offenen Filterraum 28 heraus und in einen unterhalb des Filtergehäuses 26 platzierten Behälter 64 hinein. Dieser Behälter 64 ist sowohl Vorratsbehälter für die Additiv-Partikel 60 als auch Aufnahmebehälter für das nicht mehr explosive Staub-Luftgemisch. Der Behälter 64 mit seinem Sinterboden 66, seiner Injektordüse 68 und seinem Druckluftanschluß 70 ist beispielshaft in der DE 299 14 378 U1 näher beschrieben. Auf die entsprechenden Ausführungen wird ausdrücklich Bezug genommen. Im Betriebszustand wird in kurzen Intervallen Druckluft über den Sinterboden 66 in den Filterraum 28 eingeblasen. Hierbei fluidisieren die Additiv-Partikel 60, die im vorliegenden Fall Kalkmehl (Ca₂CO₃) sind, sowie das Kalk-Staubgemisch, sofern es sich bereits im Behälter 64 gesammelt hat. Durch die Injektordüse 68 wird dieses Gemisch in den Filterraum 28 hochgeblasen. Dieses Additiv-Gemisch legt sich zum Teil an der Außenseite des Feinfilters 30 an, zum anderen Teil verbleibt es im Filterraum 28 in Schwebe, so dass der Filterraum 28 ständig mit Additiv-Partikeln 60 durchsetzt ist.

Im Laufe der Betriebszeit wird das im Behälter 64 vorhandene Kalkmehl mit dem von oben aus dem Filterraum 28 herausgefallenen Staub- und Kalkgemsich vermischt. Der im Behälter 64 vorhandene Behälterinhalt 72 steigt an bis zu einer vorgegebenen Füllstandshöhe 74. Diese Füllstandshöhe 74 stellt ein maximal zulässiges Mischungsverhältnis von zum Beispiel 80 % (Prozent) Kalkmehl und 20 % (Prozent) Staub dar. Diese Füllstandshöhe 74 wird durch eine Niveausonde 76 überwacht. Eine weitere Füllstandssonde 78 überwacht den minimal zulässigen Füllzustand innerhalb des Behälters 64. Dieser ist im Anfangszustand des Betriebes mit dem Behälter 64 gegeben. In diesem Anfangszustand sind in dem Behälter 64 lediglich die für das Endmischungsverhältnis maßgebenden 80 % (Prozent) Kalkmehl und noch kein Anteil Staub vorhanden. Die Füllstandshöhe innerhalb des Behälters 64 schwankt also zwischen den 80 % (Prozent) Kalkmehl, bei Betriebsbeginn mit dem Behälter 64, und den sich aus 80 % (Prozent) Kalkmehl und 20 % (Prozent) Staubanteil ergebenden maximalen Wert.

Durch die ständige Fluidisierung und die Verdüsung über die Injektordüse 68 kann im Behälter 64 ein homogenes, nicht explosives Gemisch eingesammelt und dann entsorgt werden.

Durch den Feinfilter 30 strömt die gereinigte Reinluft 12.6 in die Abluftleitung 80. In der Abluftleitung 80 sitzt der bereits erwähnte Ventilator 22, durch den diese Reinluft 12.6 als Reinluft 24 aus der Abscheide-Vorrichtung 10 wieder in den Raum entlassen wird.

Der Feinfilter 30 wird über eine Abreinigungseinrichtung 86 gereinigt. Diese Reinigung erfolgt über in den Feinfilter 30 im Gegenstrom eingeleitete Luftdruckstöße 88. Die dabei verwendete Druckluft wird über eine Luftleitung 90 den beispielsweise Filtertaschen des Feinfilters 30 zugeführt und in die einzelnen Filtertaschen im Gegenstrom eingeleitet.

In der Luftleitung 90 ist ein Elektromagnet-Ventil 92 eingebaut. Die Steuerung dieses Ventils 92, und damit die Steuerung des Abreinigungsvorgangs des Feinfilters 30, erfolgt über eine Differenzdruckregelung. Über Drucksensoren 94, 96 wird der Druck auf der Reinluftseite des Feinfilters 30 und auf der Rohluftseite des Feinfilters 30 mittels einer Differenzdrucküberwachung 112 ermittelt. Falls der Druckunterschied ein vorgegebenes Maß überschreitet bedeutet dies eine zu starke Verschmutzung der Filteroberfläche des Filters 30. Es wird dann das Ventil 92 geöffnet und der Filter 30 mit Hilfe dieser Druckluft stoßweise abgereinigt.

Das Filtergehäuse 26 ist über eine Druckentlastungsvorrichtung 98 gegen eventuell auftretende Verpuffungen geschützt. Diese Druckentlastungsvorrichtung 98 besitzt eine im Gefahrenfall durch den explosionsartigen Druckanstieg zerberstende Berstscheibe 100. Diese Druckentlastungsvorrichtung 98 ermöglicht damit die druckfeste, hermetisch gegen die Außenluft abgeschlossene Ausbildung der erfindungsgemäßen Vorrichtung, wie es in der Explosionsklasse ST 1 gefordert wird.

Neben der Druckentlastungsvorrichtung 98 sind zum Ableiten von im Filterraum 28 auftretenden eventuellen Verpuffungen eine Rückschlagklappe 102 in der Zuleitung 42, eine weitere Rückschlagklappe 104 in dem Ansaugrohr 14 und eine weitere Rückschlagklappe 106 in der Abluftleitung 80 vorhanden. Die Rückschlagklappen 102, 104, 106 verschließen die entsprechenden Leitungen nach außen hin. Neben diesen Schutzmaßnahmen wird die Funktion der erfindungsgemäßen Vorrichtung noch durch folgende Maßnahmen abgesichert.

Durch die schon erwähnten Niveausonden 76, 78 wird der Füllstand in dem Behälter 64 hinsichtlich seiner beiden Grenzwerte - Minimalbefüllung und Maximalbefüllung - überwacht. Durch Erreichen beziehungsweise Unterschreiten der entsprechenden maximalen beziehungsweise minimalen Füllstände wird die erfindungsgemäße Vorrichtung abgeschaltet.

In dem Druckluftanschluß 70 ist eine Druckmeßdose 110 angeschlossen, über die die Durchflußmenge an Druckluft für die Additivbedüsung aus dem Behälter 64 heraus und in den Filterraum 28 hinein überwacht wird.

Wie schon ausgeführt, erfolgt die Funktion des Filters 30 mittels einer Differenzdrucküberwachung 112.

Die Funktion des Windsichters 40 und damit die Aufrechterhaltung der gewünschten Luftgeschwindigkeit der Luft 12.2 durch den Windsichter hindurch erfolgt über die Unterdruckregelung 44.

In dem Windsichter 40 ist ferner eine Füllstandssonde 116 vorhanden, mit der die sich im Bodenbereich des Windsichters 40 ansammelnde Menge an groben Spänen überwacht wird. In Abhängigkeit von der Füllstandssonde 116 wird die Zellenradschleuse 50 angesteuert. Die Funktion der Zellenradschleuse 50 und damit die Funktion ihres Zentralrades 52 wird über einen in der Zeichnung nicht näher dargestellten Drehzahlwächter überwacht.

Die erfindungsgemäße Abscheide-Vorrichtung stellt eine betriebssichere, wirtschaftlich günstig zu betreibende Vorrichtung dar, um Aluminiumspäne aus entsprechend verunreinigter Rohluft 12 zurückgewinnen zu können. Der entsprechende Trockenabscheider kann dabei innerhalb eines Raumes an beliebigen Plätzen aufgestellt werden, da er keine leitungsmäßige Verbindung mit durch Raumwände hindurchführenden Abluftkanäle benötigt; die Reinluft kann bei dem erfindungsgemäßen Trockenabscheider nämlich wieder in den Raum zurückgeleitet werden.

## Patentansprüche

1. Vorrichtung (10) zum Abscheiden von Feststoffen aus einem gasförmigen Medium,
- mit in einem Filtergehäuse (26) vorhandenem Feinfilter (30),
- mit einem lösbar anschließbaren Auffangbehälter (64) für Feststoffe, der gleichzeitig Vorratsbehälter für in das Filtergehäuse einleitbare Additiv-Stoffe ist,
**dadurch gekennzeichnet, dass**
- ein Zyklon-Abscheider (20) dem Filtergehäuse (26) strömungsmäßig vorgeschaltet ist,
- ein Absaugventilator (22) dem Filtergehäuse (26) strömungsmäßig nachgeschaltet ist,
- ein Windsichter (40) strömungsmäßig zwischen Zyklon (20) und Filtergehäuse (26) so vorhanden ist, dass vom Zyklon (20) ausgeschiedene schwerere Feststoffe in den Windsichter (40) einleitbar sind und ein vorbestimmbarer Anteil von diesen Feststoffen durch den Windsichter hindurch weiter in das Filtergehäuse einleitbar ist,
- diese Bauteilkomponenten zu einem kompakten Gerät bauteilmäßig zusammengefasst sind.

2. Vorrichtung nach Anspruch 1,
**dadurch gekennzeichnet, dass**
- der Zyklon-Abscheider (20) zumindest ein inneres und ein äußeres Rohr (18, 16) enthält,
- ein Ansaugrohr (14) für das Feststoff-Gas-Gemisch tangential in das äußere Rohr (16) einmündet,
- das beidseitig offene innere Rohr (18) in das Filtergehäuse (26) einmündet,
- eine zu dem Windsichter (40) führende Verbindungsleitung (36) an einem tangential an dem äußeren Rohr (16) vorhandenen Leitungsstutzen angeschlossen ist,
- der Leitungsstutzen in dem äußeren Rohr zum Separieren von schwereren Feststoffanteilen gegenüber leichteren Feststoffanteilen vorhanden ist.

3. Vorrichtung nach einem der vorstehenden Ansprüche,
**dadurch gekennzeichnet, dass**
- eine der Schwerkraft der Feststoffe entgegengesetzte Luftströmung (12.2) durch den Windsichter (40) hindurch herstellbar ist.

4. Vorrichtung nach Anspruch 3,
**dadurch gekennzeichnet, dass**
- diese entgegengesetzte Luftströmung (12.2) durch eine Luftdruck-Unterdruckregelung (44) in einer ausgangsseitig des Windsichters (40) angeschlossenen, zu dem Filtergehäuse (26) hinführenden Leitungsverbindung (42) vorhanden ist.

5. Vorrichtung nach einem der vorstehenden Ansprüche,
**dadurch gekennzeichnet, dass**
- im Bodenbereich des Windsichters eine Zellenradschleuse (50) für sich im Bodenbereich abgesetzte Feststoffe vorhanden ist.

6. Vorrichtung nach Anspruch 5,
**dadurch gekennzeichnet, dass**
- ein Schleusenrad (52) im Bodenbereich des Windsichters zum Austragen der dort abgesetzten Feststoffen vorhanden ist.

7. Vorrichtung nach einem der vorstehenden Ansprüche,
**dadurch gekennzeichnet, dass**
- eine Druckentlastungsvorrichtung (98) an dem Filtergehäuse (26) angeschlossen ist.

8. Vorrichtung nach Anspruch 7,
**dadurch gekennzeichnet, dass**
- die Druckentlastungsvorrichtung (98) eine Berstscheibe (100) enthält.

9. Vorrichtung nach einem der vorstehenden Ansprüche,
**dadurch gekennzeichnet, dass**
- eine Rückschlagklappe (102, 104, 106) in dem Ansaugrohr (14) und/oder in der den Windsichter (40) mit dem Filtergehäuse (26) verbindenden Leitungsverbindung (42) und/oder in der Abluftleitung (80) jeweils vorhanden ist, durch welche die entsprechenden Leitungsverbindungen (14, 42, 80) gegenüber dem Filtergehäuse (26), bei einem plötzlichen Druckanstieg im Inneren des Filtergehäuses (26), absperrbar sind.

10. Vorrichtung nach einem der vorstehenden Ansprüche,
**dadurch gekennzeichnet, dass**
- eine Filterabreinigungsvorrichtung (86) für den Feinfilter (30) vorhanden ist.

11. Vorrichtung nach Anspruch 10,
**dadurch gekennzeichnet, dass**
- die Filterabreinigungsvorrichtung (86) eine an eine Druckluftquelle anschließbare Druckluftleitung (90) enthält, durch die im Gegenstrom stoßweise Druckluft (88) gegen die Filterelemente des Feinfilters (30) leitbar ist.

12. Vorrichtung nach einem der vorstehenden Ansprüche,
**dadurch gekennzeichnet, dass**
- der Vorratsbehälter (64) zum Auffangen der Feststoffe und zum Vorrätighalten der Additiv-Stoffe (60) einen Sinterboden (66) enthält,
- aus dem Vorratsbehälter (64) Additiv-Stoffe (60) und Feststoffe in den Filterraum (28) hineinleitbar sind.

13. Vorrichtung nach Anspruch 12,
**dadurch gekennzeichnet, dass**
- ein erster Füllstandsmelder (76) im Behälter (64) vorhanden ist, mit dem die beim Betrieb der Vorrichtung in dem Behälter zulässige maximale Menge des Additiv-Feststoff-Gemisches feststellbar ist.

14. Vorrichtung nach Anspruch 12 oder 13
**dadurch gekennzeichnet, dass**
- ein zweiter Füllstandsmelder (78) im Behälter (64) vorhanden ist, mit dem die bei Betriebsbeginn der Vorrichtung (10) in dem Behälter (64) vorhandene minimal zulässige Menge an Additivstoffen feststellbar ist.

15. Vorrichtung nach einem der vorstehenden Ansprüche,
**dadurch gekennzeichnet, dass**
- in einer Leitung (70) zum Einleiten von Druckluft in den Behälter (64) hinein eine Druckmessdose (110) so vorhanden ist, dass
- bei Über- oder Unterschreiten der Förderleistung von Druckluft das Ansaugen von ungereinigtem Feststoff-Gas-Gemisch (12) in den Zyklon (20) hinein unterbrechbar ist.

## Claims

1. Device (10) for separating solids from a gaseous medium,
- having a fine filter (30) present in a filter housing (26),
- having a releasably attachable collecting container (64) for solids, which at the same time is a supply container for additive substances which can be directed into the filter housing,
**characterized in that**
- a cyclone separator (20) is connected upstream of the filter housing (26),
- an extraction fan (22) is connected downstream of the filter housing (26),
- an air classifier (40), with respect to the flow, is present between cyclone (20) and filter housing (26) in such a way that heavier solids separated by the cyclone (20) can be directed into the air classifier (40) and a predeterminable proportion of these solids can be directed further through the air classifier into the filter housing,
- these components can be combined to form a compact unit.

2. Device according to Claim 1, **characterized in that**
- the cyclone separator (20) contains at least one inner and one outer pipe (18, 16),
- an intake pipe (14) for the solids/gas mixture opens tangentially into the outer pipe (16),
- the inner pipe (18) open on both sides opens into the filter housing (26),
- a connecting line (36) leading to the air classifier (40) is connected to a line connection piece present tangentially on the outer pipe (16),
- the line connection piece is present in the outer pipe for separating heavier solid proportions from lighter solid proportions.

3. Device according to either of the preceding claims, **characterized in that** an air flow (12.2) through the air classifier (40) can be produced, this air flow (12.2) being opposed to the gravitational force of the solids.

4. Device according to Claim 3, **characterized in that** this opposed air flow (12.2) is present due to an air-pressure vacuum control (44) in a line connection (42) attached on the outlet side of the air classifier (40) and leading to the filter housing (26).

5. Device according to one of the preceding claims, **characterized in that** there is a cellular wheel sluice (50) in the bottom region of the air classifier, this cellular wheel sluice (50) being intended for solids deposited in the bottom region.

6. Device according to Claim 5, **characterized in that** there is a sluice wheel (52) in the bottom region of the air classifier for discharging the solids deposited there.

7. Device according to one of the preceding claims, **characterized in that** a pressure-relief device (98) is attached to the filter housing (26).

8. Device according to Claim 7, **characterized in that** the pressure-relief device (98) contains a rupture disc (100).

9. Device according to one of the preceding claims, **characterized in that** there is in each case a check valve (102, 104, 106) in the intake pipe (14) and/or in the line connection (42) connecting the air classifier (40) to the filter housing (26) and/or in the exhaust-air line (80), by means of which check valve (102, 104, 106) the corresponding line connections (14, 42, 80) can be shut off from the filter housing (26) in the event of a sudden pressure increase in the interior of the filter housing (26).

10. Device according to one of the preceding claims, **characterized in that** there is a filter-dedusting device (86) for the fine filter (30).

11. Device according to Claim 10, **characterized in that** the filter-dedusting device (86) contains a compressed-air line (90) which can be connected to a compressed-air source and through which surges of compressed air (88) can be directed in counterflow against the filter elements of the fine filter (30).

12. Device according to one of the preceding claims,
**characterized in that**
- the supply container (64) for collecting the solids and for stocking the additive substances (60) contains a sintered base (66),
- additive substances (60) and solids can be directed from the supply container (64) into the filter space (28).

13. Device according to Claim 12, **characterized in that** there is a first filling-level indicator (76) in the container (64), with which filling-level indicator (76) the permissible maximum quantity of the additive-substance/solids mixture in the container during operation of the device can be detected.

14. Device according to Claim 12 or 13, **characterized in that** there is a second filling-level indicator (78) in the container (64), with which filling-level indicator (78) the minimum permissible quantity of additive substances present in the container (64) at the start of operation of the device (10) can be detected.

15. Device according to one of the preceding claims, **characterized in that** a pressure pickup (110) is present in a line (70) for directing compressed air into the container (64) in such a way that, if the delivery capacity of compressed air is exceeded or is not achieved, the drawing of contaminated solids/gas mixture (12) into the cyclone (20) can be interrupted.

## Revendications

1. Dispositif (10) pour la séparation de matières solides d'un milieu gazeux,
- avec un filtre fin (30) présent dans un boîtier de filtre (26),
- avec un réservoir de collecte (64) raccordable de façon amovible pour des matières solides, qui sert en même temps de réservoir de stockage pour des substances additives pouvant être envoyées dans le boîtier de filtre,
**caractérisé par le fait**
- **qu'**un séparateur à cyclone (20) est placé en amont du boîtier de filtre (26) dans le sens du courant,
- **qu'**un ventilateur d'aspiration (22) est placé en aval du boîtier de filtre (26) dans le sens du courant,
- **qu'**un séparateur à air (40) est présent entre le cyclone (20) et le boîtier de filtre (26) dans le sens du courant de telle manière que des matières solides lourdes séparées par le cyclone (20) puissent être envoyées dans le séparateur à air (40) et qu'une fraction prédéfinissable de ces matières solides puisse être envoyée plus loin dans le boîtier de filtre à travers le séparateur à air (40),
- **que** ces composants sont réunis en un appareil compact.

2. Dispositif selon la revendication 1,
**caractérisé par le fait**
- **que** le séparateur à cyclone (20) présente au moins un tube intérieur et un tube extérieur (18, 16),
- **qu'**un tube d'aspiration (14) pour le mélange matières solides-gaz débouche tangentiellement dans le tube extérieur (16),
- **que** le tube intérieur (18) ouvert des deux côtés débouche dans le boîtier de filtre (26),
- **qu'**une conduite de liaison (36) menant au séparateur à air (40) est raccordée à un raccord de tubes présent tangentiellement au tube extérieur (16),
- **que** le raccord de tubes est présent dans le tube extérieur pour séparer les fractions de matières solides lourdes et les fractions de matières solides plus légères.

3. Dispositif selon l'une des revendications précédentes,
**caractérisé par le fait**
- **qu'**un courant d'air (12.2) opposé à la gravité des matières solides peut être généré à travers le séparateur à air (40).

4. Dispositif selon la revendication 3,
**caractérisé par le fait**
- **que** ce courant d'air opposé (12.2) est présent à travers une régulation de dépression d'air comprimé (44) dans une conduite (42) raccordée au côté sortie du séparateur à air (40) et menant au boîtier de filtre (26).

5. Dispositif selon l'une des revendications précédentes,
**caractérisé par le fait**
- **qu'**une écluse à roue cellulaire (50) pour les matières solides déposées à la base du séparateur à air (40) est présente à la base du séparateur à air (40).

6. Dispositif selon la revendication 5,
**caractérisé par le fait**
- **qu'**une roue d'écluse (52) est présente à la base du séparateur à air (40) pour évacuer les matières solides qui s'y sont déposées.

7. Dispositif selon l'une des revendications précédentes,
**caractérisé par le fait**
- **qu'**un dispositif de décharge de pression (98) est raccordé au boîtier de filtre (26).

8. Dispositif selon la revendication 7,
**caractérisé par le fait**
- **que** le dispositif de décharge de pression (98) présente une plaque de rupture (100).

9. Dispositif selon l'une des revendications précédentes,
**caractérisé par le fait**
- **qu'**un clapet anti-retour (102, 104, 106) est présent respectivement dans le tube d'aspiration (14) et/ou dans la conduite (42) reliant le séparateur à air (40) et le boîtier de filtre (26) et/ou dans la conduite d'évacuation d'air (80), au moyen duquel les conduites respectives (14, 42, 80) peuvent être fermées par rapport au boîtier de filtre (26) en cas d'augmentation soudaine de la pression à l'intérieur du boîtier de filtre (26).

10. Dispositif selon l'une des revendications précédentes,
**caractérisé par le fait**
- **qu'**un dispositif de dépoussiérage de filtre (86) est présent pour le filtre fin (30).

11. Dispositif selon la revendication 10,
**caractérisé par le fait**
- **que** le dispositif de dépoussiérage de filtre (86) présente une conduite d'air comprimé (90) pouvant être raccordée à une source d'air comprimé, à travers laquelle de l'air comprimé (88) peut être envoyé à contre-courant par chocs contre les éléments filtrants du filtre fin (30).

12. Dispositif selon l'une des revendications précédentes,
**caractérisé par le fait**
- **que** le réservoir (64) pour la collecte des matières solides et le stockage des substances additives (60) présente un fond fritté (66),
- **que** des substances additives (60) et des matières solides peuvent être envoyées dans la chambre filtrante (28) depuis le réservoir de stockage (64).

13. Dispositif selon la revendication 12,
**caractérisé par le fait**
- **qu'**un premier détecteur de niveau (76) est présent dans le réservoir (64), qui permet de déterminer la quantité maximum admissible du mélange additif-matières solides dans le réservoir lors du fonctionnement du dispositif.

14. Dispositif selon la revendication 12 ou 13,
**caractérisé par le fait**
- **qu'**un deuxième détecteur de niveau (78) est présent dans le réservoir (64), qui permet de déterminer la quantité minimum admissible de substances additives présentes dans le réservoir (64) au début du fonctionnement du dispositif.

15. Dispositif selon l'une des revendications précédentes,
**caractérisé par le fait**
- **qu'**une boîte de mesure de pression (110) est présente dans une conduite (70) servant à envoyer de l'air comprimé dans le réservoir (64), de telle manière
- **que** l'aspiration du mélange matières solides-gaz non purifié dans le cyclone (20) peut être interrompue en cas de dépassement en plus ou en moins du débit d'air comprimé.
